# EUROPEAN PATENT APPLICATION

(11) **EP 0 654 609 A2**
(43) Date of publication of application: **24.05.1995**
(21) Application number: 94203001.6
(22) Date of filing: 15.10.1994
(51) Int. Cl.: F16B 12/42

(54) **Joint for the rigid coupling of casings of sheet metal**

(30) Priority: 02.11.1993 IT MI932319
(71) Applicant: DAN S.r.l., I-36100 Vicenza (IT)
(72) Inventor: Salvagnini, Guido, I-36040 Sarego (Vicenza) (IT)
(74) Representative: Marchi, Massimo

(57) **Abstract**

The joint comprises a first set of joining elements (10, 50, 15, 17, 52) obtained on a flat part of a first casing of sheet metal (2), and a second set of joining elements (11-14, 16, 18, 21) obtained on a flat part (8) of a second casing of sheet metal (1); the first set of joining elements (10, 50, 15, 17, 52) comprises at least one notch, defining at least one opening (50, 52) in said flat part of the first casing of sheet metal (2) and a tang (10); the second set of joining elements (11-14, 16, 18, 21) comprises at least one group of bridges (11-13), protruding to a different extent one from the other from said flat part (8) of the second casing of sheet metal (1), that can be inserted in said at least one opening (50, 52) and that can be displaced in a direction parallel to said flat part of the first casing of sheet metal (2) to surround said tang (10) and to engage one edge of said at least one opening (50, 52), so as to oppose a displacement of the two casings of sheet metal (1, 2) in the orthogonal direction and to a further displacement of the same in the direction and in the sense of coupling of the two casings of sheet metal (1, 2). Preferably there are also further joining elements (14-18) suitable for preventing relative displacements of the two casings of sheet metal (1, 2), as well as their involuntary uncoupling.

## Description

The present invention relates to a joint for the rigid coupling of casings of sheet metal.

The rigid coupling or joining between two casings of sheet metal can be made with several techniques, such as welding, riveting, buttoning, screwing up and hooking up.

Welding is the most widely used joining technique, and it guarantees the highest resistance to the separation of the two welded casings. The points to be joined, however, have to be accessible to the welding electrodes, and the casings to be welded should not be protected by zinc, paint or plastic. A further drawback resides in the fact that the two welded casings cannot be separated except by breakage.

Riveting and buttoning also exhibit drawbacks linked with the fact that the points to be joined have to be accessible to the riveting or to the buttoning machine, and the joined casings cannot be separated except by recourse to breakage.

Screwing up by means of screw and nut is laborious, and as with the preceding techniques it requires that the points to be joined be accessible, while hooking up can give rise to involuntary and undesired uncouplings.

In view of the described state of the art, the object of the present invention is to provide a joint for the rigid coupling of two casings of sheet metal possibly coated with a protective material, such that the joining of the two casings can be made anywhere and by any person without the use of any tool, and thus without the points to be joined having to be accessible. Such a joint should also not require the use of any material other than that constituting the casings to be coupled, and it should be possible to manufacture it with a single manufacturing process, made by the same machine used for the manufacture of the casings to be joined. It should also be kept in mind that for such a joint to be used in the coupling of box-like panels for furniture, whose manufacture includes pressing steps, the joint should not have protruding parts located on the faces of the individual panels.

According to the present invention, such object is attained thanks to a joint for the coupling of a first casing of sheet metal to a second casing of sheet metal, characterized in that it comprises a first set of joining elements obtained on a flat part of the first casing of sheet metal, which flat part constitutes a joining plane of the two casings of sheet metal, and a second set of joining elements obtained on a flat part of the second casing of sheet metal, said first set of joining elements comprising at least one notch, defining at least one opening in said flat part of the first casing of sheet metal and a tang lying in said joining plane, and said second set of joining elements comprising at least one group of bridges, protruding to a different extent one from the other from said flat part of the second casing of sheet metal, that can be inserted in said at least one opening and that can be displaced in a direction parallel to said joining plane to surround said tang and to engage one edge of said at least one opening, so as to oppose a displacement of the two casings of sheet metal in the direction orthogonal to said joining plane and to a further displacement of the same in the direction and in the sense of coupling of the two casings of sheet metal.

Preferably, said first set of joining elements comprises at least one further notch defining a further substantially rectangular opening in said flat part of the first casing of sheet metal, and said second set of joining elements comprises a further bridge that protrudes from said flat part of the second casing of sheet metal and that can be inserted in said further opening to oppose a displacement of the two casings of sheet metal in a direction lying in said joining plane, orthogonal to the direction of coupling.

Said first set of joining elements can also comprise at least one other opening in said flat part of the first casing of sheet metal, and said second set of joining elements can comprise one other notch defining a tang protruding from said flat part of the second casing of sheet metal, so as to insert itself in said other opening to oppose a displacement of the two casings of sheet metal in the direction and in the sense opposite to the direction of coupling of the shelf 1 to the upright 2.

A joint according to the invention allows the execution, in a simple manner that anyone can carry out, of the coupling between two casings of sheet metal, whose surfaces have possibly been coated with any protective material, without the help of any tool and thus without the points to be joined having to be accessible; this latter feature allows the use of the joint according to the invention for the coupling of walls of completely enclosed hollow casings of sheet metal, such as for example box-like panels with thin walls.

Such a joint can also be made by means of a simple punching machine, that is in any case already used in the process of manufacturing the casings of sheet metal; this feature, in combination with the fact that the use of material other than the sheet metal constituting the casings to be coupled is not required, translates into an extremely limited cost of production.

Two casings of sheet metal coupled by means of the joint according to the invention can be uncoupled manually without breaking any parts, and they can therefore be coupled and uncoupled several times.

Since lastly the joint according to the invention has elements protruding from only one of the two casings of sheet metal to be coupled, it can be used as the means for assembling furniture panels made of sheet metal, wherein the flat part of the first casing with no protusions can be a flat face of the first panel that can be used, for example, as an upright and that of the second casing with protrusion can be the lateral edge of a second panel that can be used, for example, as a shelf.

The features of the present invention will be made more evident by the following detailed description of an embodiment thereof illustrated as a non-limiting example in the enclosed drawings, wherein:
Fig. 1 is a cross-sectional view taken along a vertical plane of a pair of joints according to the invention;
Fig. 2 is a cross-sectional view taken along the line II-II of Fig. 1 of one of said joints;
Fig. 3 is a cross-sectional view taken along the line III-III of Fig. 1;
Fig. 4 is a front view of the flat part of a first casing of sheet metal provided with a first set of joining elements of the joint according to the invention;
Fig. 5 is a front view of a flat part of a second casing of sheet metal, to be joined to said first casing, with a second set of joining elements of the joint according to the invention;
Fig. 6 is a rear view of said flat part of the first casing of sheet metal, coupled with the second casing of sheet metal;
Fig. 7 is a cross-sectional view taken along the line VII-VII of Fig. 6;
Fig. 8 is a cross-sectional view taken along the line VIII-VIII of Fig. 7;
Fig. 9 is a cross-sectional view taken along the line IX-IX of Fig. 6;
Figs. 10-12 are cross-sectional views similar to Fig. 1, illustrating three different moments of the steps for the two casings of sheet metal to be coupled;
Fig. 13 is similar to Fig. 5, but it refers to a second embodiment of the joint according to the invention;
Fig. 14 is similar to Fig. 4, but it refers to said second embodiment;
Fig. 15 is similar to Fig. 6, but this also refers to the second embodiment;
Fig. 16 is a cross-sectional view taken along the line XVI-XVI of Fig. 15.

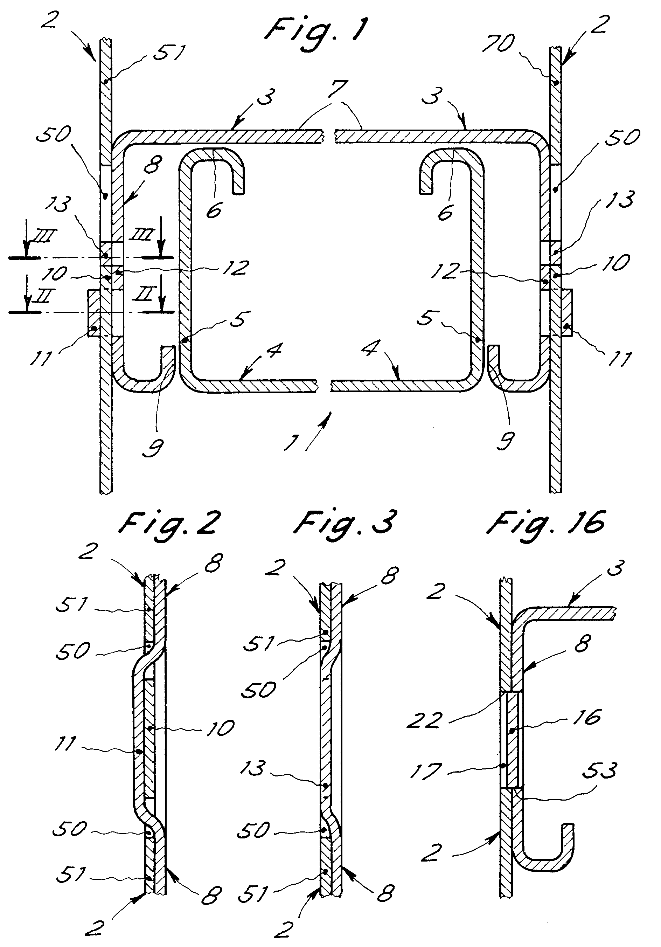

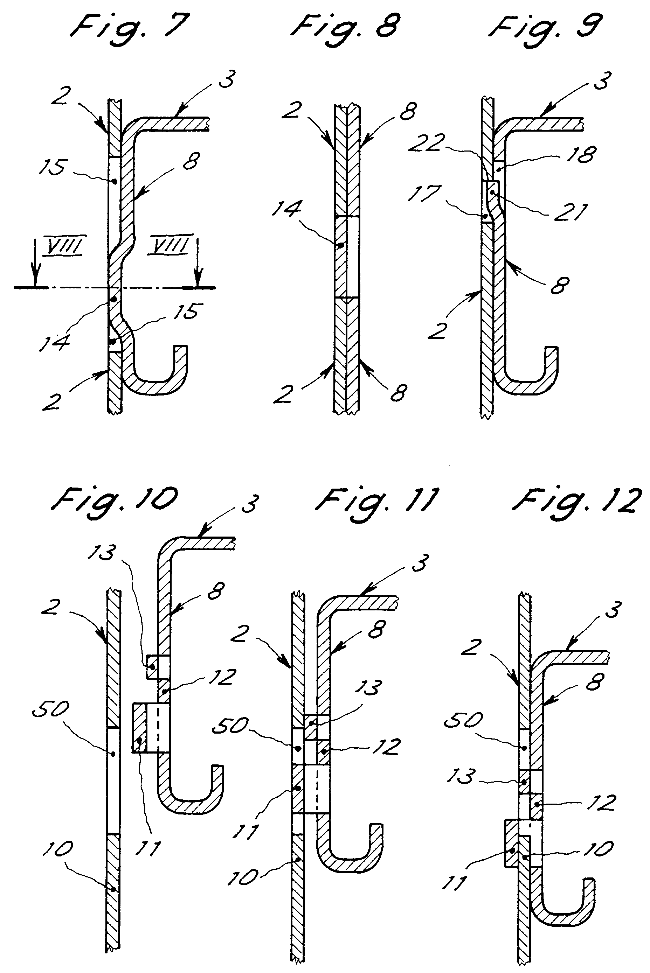

The embodiment shown as an example in Figs. 1-12 refers to the use of a joint according to the invention for coupling box-like casings of sheet metal constituting as a whole a set of shelves that, as is known, comprises lateral uprights to which the shelves are fastened.

There is shown in Fig. 1 a shelf 1 supported by a pair of uprights 2. The shelf 1, known in itself, has a box-like structure, and it is constituted by an upper metal sheet 3 and by a lower metal sheet 4; the latter is folded back so as to define along its sides pairs of internal vertical walls 5, whose upper ends are further folded back to define a flat horizontal upper frame 6. The upper metal sheet 3 constitutes a horizontal support 7 for the shelf 1, and it is also folded back to define pairs of external vertical walls 8, constituting the edges of the shelf 1, the lower ends of which are folded back to define a flat vertical lateral frame 9.

Inside the box-like structure represented by the lower metal sheet 4 honeycomb paper is usually interposed, glued to the lower and upper metal sheets 4 and 3. The latter is then glued to the lower metal sheet 4 at the horizontal frame 6 and at the vertical frame 9.

The uprights 2, of which the drawings show only a portion of two metal sheets 51 and 70 that constitute their external wall, have a box-like structure similar to that of the shelf 1. All the metal sheets 3, 4, 51 and 70 generally have the same thickness.

Since during their manufacture the panels constituting both the shelves 1 and the uprights 2 have to be inserted between planes of presses, the faces of such panels should not have any protrusions.

The joint comprises a first set of joining elements obtained on the internal walls of the uprights 2, co-operating with a second set of joining elements, some of which protrude, obtained on the vertical walls 8 of the metal sheet 3 constituting the edges of the shelf 1.

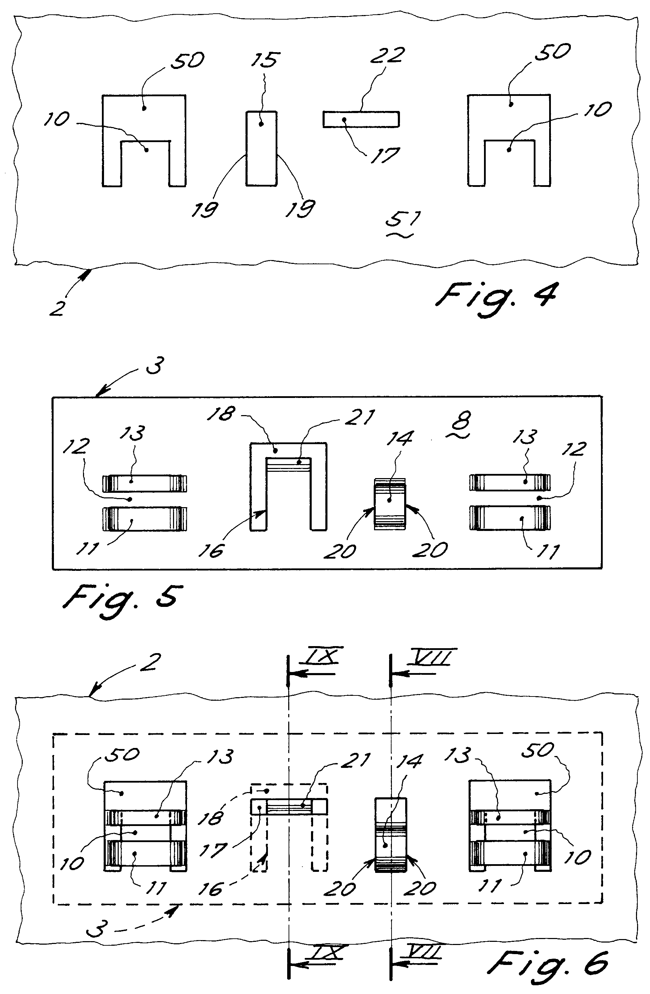

The metal sheets 51 and 70 constituting the external walls of the uprights 2 are each provided with two horseshoes-shaped openings 50, obtained by punching with the removal of material, aligned horizontally and defining respective tangs 10 with a substantially rectangular shape (Fig. 4).

The vertical walls 8 of the metal sheet 3 are each provided with three groups of horizontal bridges 11, 12 and 13 (Fig. 5), constituted by rectangular portions of the metal sheet 3 separated by punching the sheet itself along their longer sides and joined to it at their shorter sides; the bridges 11 and 13 protrude from the surface of the vertical walls 8 by an amount corresponding to twice and once the thickness, respectively, of the metal sheets used (Figs. 1-3); but the bridge 12, intermediate between the two bridges 11 and 13, lies in the plane of the vertical wall 8 (Figs. 1 and 5).

Each group of bridges 11, 12 and 13 constitutes, together with a respective opening 50 and with the tang 10 defined by it, a set of joining elements of the joint according to the invention.

To accomplish the coupling between the shelf 1 and one of the uprights 2, the shelf 1 is moved near the upright 2 and is made to slide downward until the bridge 11 is opposite the opening 50 in the wall of the upright 2; at this point the shelf 1 is displaced to one side so that the bridge 11 moves inside said opening 50 (Fig. 11), and it is once again made to slide downward; when the bridge 13 is also opposite the opening 50, the shelf 1 is displaced further to one side so that the tang 10 slides under the bridge 11 (Fig. 12). The shelf 1 is then made to slide downward until the lower edge of the bridge 13 rests on the upper edge of the tang 10, preventing any further downward displacement of the shelf 1. The bridge 12, resting laterally on the tang 10, prevents any bending of the same tang 10 even when the shelf 1 is loaded up. Naturally this operation is made possible only in the case where the opening 50 has a height that is at least equal to the sum of the heights of the three bridges 11, 12 and 13.

The coupling made in this way prevents the downward displacement of the shelf 1, as well as any displacements in the direction orthogonal to the wall of the upright 2, while it does allow limited horizontal displacements of the shelf 1 along the wall of the upright 2 as a consequence of the clearances existing between the tang 10 and the bridge 11 (Fig. 2), and between the walls of the opening 50 and the bridge 13 (Fig. 3). It is also possible to uncouple the shelf 1 from the upright 2 simply by displacing the shelf 1 upward, so that the tang 10 slides off the bridge 11.

If no hole has to be visible on the walls of the upright 2 after the shelf has been fitted, the height of the vertical wall 8 of the latter should not be less than the heights of the three bridges 11, 12 and 13 and of the opening 50. If shelves having a lower thickness are to be used without this leaving portions of the openings 50 uncovered, it is possible to arrange for the bridge 13 to be to one side of the bridge 11 (Fig. 13), by providing corresponding openings 52 in the lateral walls of the uprights 2. This allows a reduction to be made in the height of the openings 50, that should be sufficient to allow the passage, during the assembly stage, of the bridge 11 only. In this case the bridge 12 comes to coincide with the vertical wall 8 itself. After assembly has been completed (Fig. 15), the bridge 13 rests on the lower edge of the opening 52 in which it is inserted, thus preventing any further movement in the direction and in the sense of coupling of the shelf 1 to the upright 2.

The joint can include other elements suitable for preventing the shelf 1 from making limited transversal movements along the wall of the upright 2.

As shown in Figs. 5-8, the wall 8 of the shelf 1 can also have a further rectangular bridge 14 whose two longer sides, separated from the metal sheet 3 by punching, are vertical; the bridge 14 protrudes from the plane of the vertical wall 8 by an amount corresponding to once the thickness of the metal sheets, and during the assembly of the shelf 1 on the upright 2, said bridge 14 engages an opening 15 with a substantially identical width and obtained on the upright 2 (Figs. 4 and 6-8), so that the vertical edges 19 of the opening 15, acting on the edges 20 of the bridge 14, prevent transversal displacements of the shelf 1.

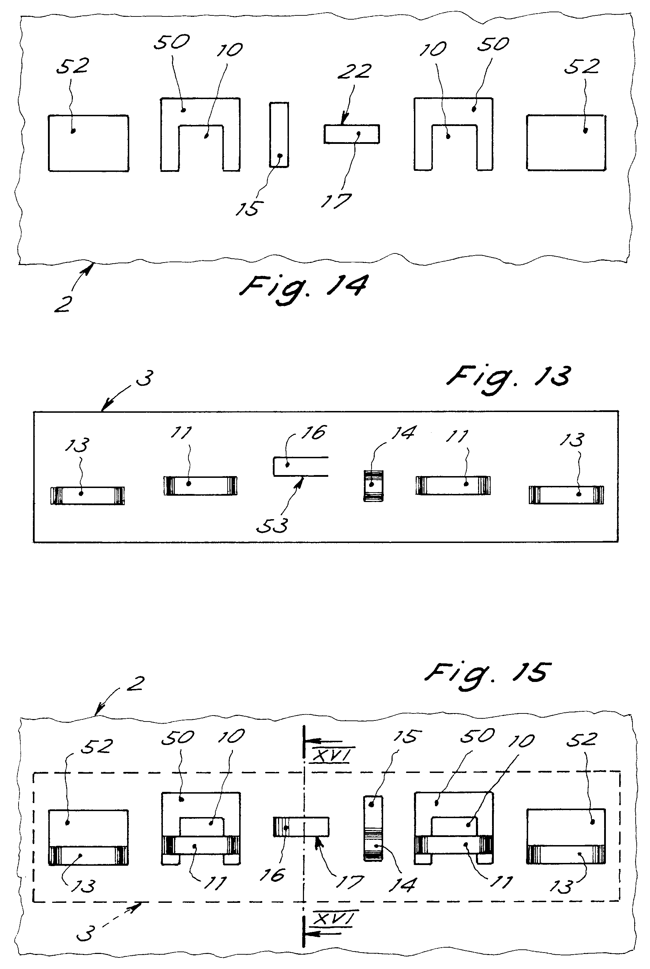

Lastly, to prevent the shelf 1, once it is coupled to the upright 2, from being accidentally uncoupled, the vertical wall 8 can be provided with a rectangular tang 16 (Fig. 5) similar to tangs 10 and defined by a horseshoe-shaped opening 18 made by a punch in the vertical wall 8; the upper end 21 of the tang 16 is deformed and protrudes from the plane of the vertical wall 8 (Fig. 9), so that it engages an opening 17 obtained, again by punching, in the upright 2 (Fig. 4). The upper end 21 of the tang 16 interferes with the edge 22 of the wall 51 above the opening 17 (Figs. 6 and 9), preventing in this way the upward displacement of the shelf 1 and thus its involuntary uncoupling from the upright 2, with which it remains firmly engaged in the position it has attained. The tang 16 also has a length sufficient to ensure the possibility of its upper end 21 being elastically displaced. The intentional uncoupling of the shelf 1 from the upright 2 is, however, still possible, for example by providing a small hole in the sheet metal through which it is possible to pass any tool of some length suitable for causing the deflection of the tang 16 and its disengagement from the opening 17.

Again with the purpose of reducing the vertical dimension of the joining elements constituting the joint, and in order to provide shelves 1 with a lesser thickness, the rectangular tang 16 can be arranged horizontally instead of vertically, and it can be defined by a simple U-shaped notch rather than by a horseshoe-shaped opening. This solution is shown in Figs. 13-16; the tang 16, deformed so that its end protrudes frontally from the lateral wall 8, engages the opening 17 of the wall of the upright 2, remaining trapped between the edge 22 of the opening 17 and the edge 53 of the notch by which the tang 16 itself is defined (Fig. 16). The tang 16 thus behaves like a key, preventing the uncoupling of the shelf 1 from the upright 2.

## Claims

1. Joint for the coupling of a first casing of sheet metal (2) to a second casing of sheet metal (1), characterized in that it comprises a first set of joining elements (10, 50, 15, 17, 52) obtained on a flat part of the first casing of sheet metal (2), which flat part constitutes a joining plane of the two casings of sheet metal (1, 2), and a second set of joining elements (11-14, 16, 18, 21) obtained on a flat part (8) of the second casing of sheet metal (1), said first set of joining elements (10, 50, 15, 17, 52) comprising at least one notch, defining at least one opening (50, 52) in said flat part of the first casing of sheet metal (2) and a tang (10) lying in said joining plane, and said second set of joining elements (11-14, 16, 18, 21) comprising at least one group of bridges (11-13), protruding to a different extent one from the other from said flat part (8) of the second casing of sheet metal (1), that can be inserted in said at least one opening (50, 52) and that can be displaced in a direction parallel to said joining plane to surround said tang (10) and to engage one edge of said at least one opening (50, 52), so as to oppose a displacement of the two casings of sheet metal (1, 2) in the direction orthogonal to said joining plane and to a further displacement of the same in the direction and in the sense of coupling of the two casings of sheet metal (1, 2).

2. Joint according to claim 1, characterized in that said group of bridges (11-13) comprises a lower horizontal bridge (11), an intermediate horizontal bridge (12) and an upper horizontal bridge (13), protruding respectively from said flat part (8) of the second element of sheet metal (1) by an amount corresponding to twice the thickness of the sheet metal, lying in the plane of said flat part (8) of the second element of sheet metal (1) and protuding from said flat part (8) of the second element of sheet metal (1) by an amount corresponding to the thickness of the sheet metal, and said opening (50) has a height at least equal to the sum of the heights of said lower (11), intermediate (12) and upper bridge (13), so that, once said lower bridge (11) and said upper bridge (13) have been inserted in said opening (50) and the second element of sheet metal (1) has been displaced with respect to the first element in sheet metal (2) in the direction and in the sense of coupling, the lower bridge (11) and the intermediate bridge (12) surround said tang (10) on both sides to prevent its deflection, while the upper bridge (13) rests up against an upper edge of said tang (10).

3. Joint according to claim 1, characterized in that said group of bridges (11-13) comprises a first lower horizontal bridge (11) protruding from said flat part (8) of the second element of sheet metal (1) by an amount corresponding to twice the thickness of the sheet metal, and a second horizontal bridge (13) located to one side of the first bridge (11) and protruding from said flat part (8) by an amount corresponding to the thickness of the sheet metal, and said at least one opening (50, 52) comprises a first opening (50) provided with said tang (10) and arranged and dimensioned so as to receive said first bridge (11) and a second opening (52) arranged and dimensioned so as to receive said second bridge (13) when said first bridge (11) is inserted in said first opening (50), said second opening (52) having a height such as to allow the displacement of the second bridge (13) in the direction of coupling of the two casings of sheet metal (1, 2) so that, once coupling has taken place, the first bridge (11) and the flat part (8) of the second element of sheet metal (1) surround said tang (10) on both sides, while the second bridge (13) rests on the lower edge of said second opening (52) to prevent the further displacement of the two casings of sheet metal (1, 2) in the direction and in the sense of their coupling.

4. Joint according to claim 1, characterized in that said first set of joining elements (10, 50, 15, 17, 52) comprises at least one further notch defining a further substantially rectangular opening (15) in said flat part of the first casing in sheet metal (2), and said second set of joining elements (11-14, 16, 18, 21) comprises a further bridge (14) protruding from said flat part (8) of the second casing of sheet metal (1) and that can be inserted in said further opening (15) to oppose a displacement of the two casings of sheet metal (1, 2) in a direction lying in said joining plane, orthogonal to the direction of coupling.

5. Joint according to claim 1, characterized in that said first set of joining elements (10, 50, 15, 17, 52) comprises at least one other opening (17) in said flat part of the first element of sheet metal (2), and said second set of joining elements (11-14, 16, 18, 21) comprises another notch (18) defining a tang (16) protruding from said flat part (8) of the second casing of sheet metal (1), so that it inserts itself in said other opening (17) to oppose the displacement of the two casings of sheet metal (1, 2) in the direction and sense opposite to the coupling's.
